(19) Europäisches Patentamt / European Patent Office / Office européen des brevets

(11) **EP 4 455 343 A1**

(12) **EUROPEAN PATENT APPLICATION**
published in accordance with Art. 153(4) EPC

(43) Date of publication:
**30.10.2024 Bulletin 2024/44**

(21) Application number: **22911928.4**

(22) Date of filing: **21.12.2022**

(51) International Patent Classification (IPC):
*C22C 38/34* (2006.01)   *C22C 38/38* (2006.01)
*C22C 38/06* (2006.01)   *C22C 38/20* (2006.01)
*C22C 38/22* (2006.01)   *C22C 38/32* (2006.01)
*C22C 38/28* (2006.01)   *C21D 8/12* (2006.01)
*H01F 1/147* (2006.01)   *H02K 15/02* (2006.01)

(52) Cooperative Patent Classification (CPC):
**B24C 1/10; C21D 8/12; C21D 9/46; C22C 38/00;
C22C 38/06; C22C 38/20; C22C 38/22;
C22C 38/26; C22C 38/28; C22C 38/32;
C22C 38/34; C22C 38/38; H01F 1/147; H02K 15/02**

(86) International application number:
**PCT/KR2022/020964**

(87) International publication number:
**WO 2023/121295 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.12.2021   KR 20210184605**

(71) Applicant: **POSCO Co., Ltd
Pohang-si, Gyeongsangbuk-do 37859 (KR)**

(72) Inventor: **KWON, Soobin
Pohang-si, Gyeongsangbuk-do 37859 (KR)**

(74) Representative: **Meissner Bolte Partnerschaft
mbB
Patentanwälte Rechtsanwälte
Postfach 86 06 24
81633 München (DE)**

(54) **NON-ORIENTED ELECTRICAL STEEL SHEET, METHOD FOR MANUFACTURING SAME, AND MOTOR CORE COMPRISING SAME**

(57)   A non-oriented electrical steel sheet according to an embodiment of the present invention includes: a steel sheet base material containing, by wt%: 2.0 to 6.5% of Si, 0.1 to 1.3% of Al, 0.3 to 2.0% of Mn, 0.005 to 0.06% of Cr, and a balance of Fe and other inevitable impurities; and an insulating coating film positioned on the steel sheet base material, wherein Formula 1 below is satisfied before stress relief annealing, and Formula 2 below is satisfied after the stress relief annealing.

[Formula 1]

$$0.1 \geq [\text{Mn coating film}]/[\text{Mn50}]$$

[Formula 2]

$$10 \geq [\text{Mn coating film}]/[\text{Mn50}] \geq 1$$

(in Formulas 1 and 2, [Mn coating film] refers to an average content of Mn (wt%) in the insulating coating film, and [Mn50] refers to a content of Mn (wt%) at a depth of 50 $\mu$m from an interface between the steel sheet base material and the insulating coating film toward an inside of the steel sheet base material.)

FIG. 1

**Description**

**[Technical Field]**

An embodiment of the present invention relates to a non-oriented electrical steel sheet, a method for manufacturing the same, and a motor core including the same. Specifically, an embodiment of the present invention relates to a non-oriented electrical steel sheet with improved close adhesion property of an insulating coating film by appropriately controlling a content of Cr, increasing a projection amount of a shot ball when removing scale, and accordingly preventing diffusion of Mn into the insulating coating film during stress relief annealing, a method for manufacturing the same, and a motor core including the same.

**[Background Art]**

Non-oriented electrical steel sheets are mainly used in motors that convert electrical energy into mechanical energy, and in order to exhibit high efficiency in this process, excellent magnetic properties of the non-oriented electrical steel sheets are required. Especially in recent years, as eco-friendly technologies are attracting attention, it has become very important to increase the efficiency of the motor, which accounts for more than half of the total electric energy consumption, and accordingly, the demand for the non-oriented electrical steel sheet having excellent magnetic properties is also increasing.

The magnetic properties of the non-oriented electrical steel sheet are mainly evaluated by iron loss and magnetic flux density. The iron loss means energy loss that occurs at specific magnetic flux density and frequency, and the magnetic flux density means the degree of magnetization obtained under a specific magnetic field. The lower the iron loss, the motor with higher energy efficiency may be manufactured under the same conditions, and the higher the magnetic flux density, the smaller the motor or the copper loss may be reduced. Therefore, it is important to make a non-oriented electrical steel sheet with low iron loss and high magnetic flux density.

The characteristics of the non-oriented electrical steel sheet to be considered depending on an operating condition of the motor also vary. As a criterion for evaluating the characteristics of the non-oriented electrical steel sheet used in the motor, W15/50, which is iron loss when a 1.5 T magnetic field is applied at a commercial frequency of 50 Hz, is regarded as the most important criterion for many motors. However, the iron loss of W15/50 is not regarded as the most important criterion for all motors used for various applications; instead the iron loss at different frequencies or applied magnetic fields is evaluated depending on a main operating condition. Particularly, from among the non-oriented electrical steel sheets used in drive motors of recent electric vehicles, there are many cases in which the magnetic characteristic is important at low magnetic fields of 1.0 T or less and high frequencies of 400 Hz or higher, so the characteristic of the non-oriented electrical steel sheet is evaluated with iron loss such as W10/400.

In order to manufacture a product such as a motor or a transformer from the non-oriented electrical steel sheet, the non-oriented electrical steel sheet should be slit into a specific shape. During this process, stress is applied to the non-oriented electrical steel sheet, and stress relief annealing is performed so as to remove the stress.

During the stress relief annealing process, a Mn component in the steel sheet diffuses into an insulating coating film, which causes a decrease in close adhesion property between the steel sheet and the insulating coating film. There are attempts to suppress the diffusion of Mn by adding Sb and Sn and controlling a content relation between Al and Mn, but these attempts have limitations. Suppressing the diffusion of Mn through formation of a surface segregation element layer and a surface oxide layer is little effective, resulting in a weakening of the bonding force between the insulating coating and the base material.

**[Disclosure]**

**[Technical Problem]**

An embodiment of the present invention attempts to provide a non-oriented electrical steel sheet, a method for manufacturing the same, and a motor core including the same. Specifically, an embodiment of the present invention attempts to provide a non-oriented electrical steel sheet with improved close adhesion property of an insulating coating film by appropriately controlling a content of Cr to thus prevent diffusion of Mn into the insulating coating film during stress relief annealing, a method for manufacturing the same, and a motor core including the same.

**[Technical Solution]**

A non-oriented electrical steel sheet according to an embodiment of the present invention includes: a steel sheet base material containing, by wt%: 2.0 to 6.5% of Si, 0.1 to 1.3% of Al, 0.3 to 2.0% of Mn, 0.005 to 0.06% of Cr, and a balance of Fe and other inevitable impurities; and an insulating coating film positioned on the steel sheet base material, wherein Formula 1 below is satisfied before stress relief annealing, and Formula 2 below is satisfied after the stress relief annealing.

[Formula 1]

$$0.1 \geq [\text{Mn coating film}]/[\text{Mn50}]$$

[Formula 2]

$$10 \geq [\text{Mn coating film}]/[\text{Mn50}] \geq 1$$

(in Formulas 1 and 2, [Mn coating film] refers to an average content of Mn (wt%) in the insulating coating film, and [Mn50] refers to a content of Mn (wt%) at a depth of 50 $\mu$m from an interface between the steel sheet base material and the insulating coating film toward an inside of the steel sheet base material.)

The steel sheet base material may further contain one or more of 0.06 wt% or less of Sn and 0.06 wt% or less of Sb.

The steel sheet base material may further contain 0.005 wt% or less of one or more of C, N, S, Ti, Nb, and V.

The steel sheet base material may further contain one or more of 0.01 to 0.2 wt% of Cu, 0.100 wt% or less of P, 0.002 wt% or less of B, 0.01 wt% or less of Mo, 0.005 wt% or less of Mg, and 0.005 wt% or less of Zr.

The stress relief annealing may be performed at a temperature of 700°C to 850°C for 10 minutes to 300 minutes.

A method for manufacturing a non-oriented electrical steel sheet according to an embodiment of the present invention includes: manufacturing a hot-rolled sheet by hot rolling a slab containing, by wt%: 2.0 to 6.5% of Si, 0.1 to 1.3% of Al, 0.3 to 2.0% of Mn, 0.005 to 0.06% of Cr, and a balance of Fe and inevitable impurities; removing scale present on a surface of the hot rolled sheet; manufacturing a cold-rolled sheet by cold rolling the hot-rolled sheet from which the scale has been removed; and subjecting the cold-rolled sheet to cold-rolled sheet annealing, wherein the removing the scale includes removing the scale by projecting a shot ball onto a steel sheet in an amount of 15 to 35 kg/(min·m$^2$).

An average particle size of the shot ball may be 0.1 to 1 mm, and the shot ball may be projected for 1 second to 60 seconds.

A material of the shot ball may be an Fe-based alloy.

The cold-rolled sheet annealing may be annealed at a temperature of 700°C to 1100°C for 10 to 1000 seconds.

The method may further include performing hot-rolled sheet annealing before the removing the scale.

The method may further include performing stress relief annealing after the cold-rolled sheet annealing.

A motor core according to an embodiment of the present invention includes: a stator made by stacking a plurality of non-oriented electrical steel sheets, and a rotor made by stacking a plurality of non-oriented electrical steel sheets,

wherein the non-oriented electrical steel sheets in the rotor include, respectively: a steel sheet base material containing, by wt%: 2.0 to 6.5% of Si, 0.1 to 1.3% of Al, 0.3 to 2.0% of Mn, 0.005 to 0.06% of Cr, and a balance of Fe and other inevitable impurities, and an insulating coating film positioned on the steel sheet base material, and Formula 1 below is satisfied, and

wherein the non-oriented electrical steel sheets in the stator include, respectively: a steel sheet base material containing, by wt%: 2.0 to 6.5% of Si, 0.1 to 1.3% of Al, 0.3 to 2.0% of Mn, 0.005 to 0.06% of Cr, and a balance of Fe and other inevitable impurities, and an insulating coating film positioned on the steel sheet base material, and Formula 2 below is satisfied.

[Formula 1]

$$0.1 \geq [\text{Mn coating film}]/[\text{Mn50}]$$

[Formula 1]

$$10 \geq [\text{Mn coating film}]/[\text{Mn50}] \geq 1$$

(in Formulas 1 and 2, [Mn coating film] indicates an average content of Mn (wt%) in the insulating coating film, and [Mn50] indicates a content of Mn (wt%) at a depth of 50 $\mu$m from an interface between the steel sheet base material and the insulating coating film toward an inside of the steel sheet base material.)

The non-oriented electrical steel sheets included in the stator and rotor may be non-oriented electrical steel sheets derived from the same coil.

A difference in contents of Si, Al, and Mn between the non-oriented electrical steel sheets included in the stator and the rotor may be 0.20 wt% or less.

A method for manufacturing a non-oriented electrical steel sheet according to an embodiment of the present invention includes manufacturing a hot-rolled sheet by hot rolling a slab containing, by wt%: 2.0 to 6.5% of Si, 0.1 to 1.3% of Al, 0.3 to 2.0% of Mn, 0.005 to 0.06% of Cr, and a balance of Fe and other inevitable impurities; removing scale present on a surface of the hot rolled sheet; manufacturing a cold-rolled sheet by cold rolling the hot-rolled sheet; annealing the cold-rolled sheet; forming an insulating coating film on the cold-rolled sheet; and performing stress relief annealing, wherein Formula 1 below is satisfied before the stress relief annealing, and Formula 2 is satisfied after the stress relief annealing.

[Formula 1]

$$0.1 \geq [\text{Mn coating film}]/[\text{Mn50}]$$

[Formula 1]

$$10 \geq [\text{Mn coating film}]/[\text{Mn50}] \geq 1$$

(in Formulas 1 and 2, [Mn coating film] indicates an average content of Mn (wt%) in the insulating coating film, and [Mn50] indicates a content of Mn (wt%) at a depth of 50 $\mu$m from an interface between the steel sheet base material and the insulating coating film toward an inside of the steel sheet base material.)

The removing the scale may remove the scale by projecting a shot ball onto the steel sheet in an amount of 15 kg/(m$^2$·min) to 35 kg/(m$^2$·min).

The cold-rolled sheet annealing may be annealed at a temperature of 700°C to 1100°C for 10 to 1000 seconds.

The stress relief annealing may be performed at a temperature of 700°C to 850°C for 10 minutes to 300 minutes.

[Advantageous Effects]

According to an embodiment of the present invention, by including Cr within a certain range, the Mn component contained in the steel sheet base material is prevented from diffusing into the insulating coating film during the stress relief annealing process, whereby the bonding force between the insulating coating film and the steel sheet base material is maintained even after the stress relief annealing.

With this, the performance of eco-friendly automobile motors, high-efficiency home appliance motors, and super premium electric motors can be further improved through the stress relief annealing.

[Description of the Drawings]

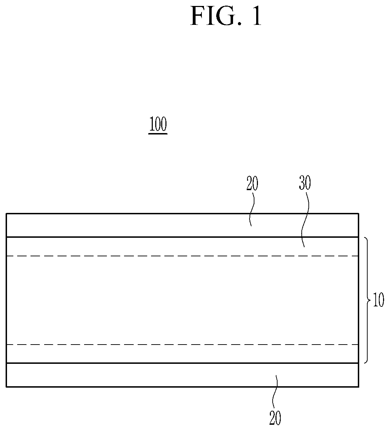

FIG. 1 is a schematic diagram of a cross section of a non-oriented electrical steel sheet according to an embodiment of the present invention.

[Mode for Invention]

The terms such as first, second and third are used for describing, but are not limited to, various parts, components, regions, layers, and/or sections. These terms are used only to discriminate one part, component, region, layer or section from another part, component, region, layer or section. Therefore, a first part, component, region, layer or section described below may be referred to as a second part, component, region, layer or section without departing from the scope of the present invention.

The technical terms used herein are set forth only to mention specific embodiments and are not intended to limit the present invention. Singular forms used herein are intended to include the plural forms as long as phrases do not clearly indicate an opposite meaning. In the present specification, the term "including" is intended to embody specific characteristics, regions, integers, steps, operations, elements and/or components, but is not intended to exclude presence or addition of other characteristics, regions, integers, steps, operations, elements, and/or components.

When a part is referred to as being "above" or "on" another part, it may be directly above or on the other part or an intervening part may also be present. In contrast, when a part is referred to as being "directly above" another part, there is no intervening part present.

In addition, unless otherwise stated, % means wt%, and 1 ppm is 0.0001 wt%.

In an embodiment of the present invention, further including an additional element means that the additional element is included by replacing a balance of iron (Fe) by an amount of additional element added.

Unless otherwise defined, all terms including technical and scientific terms used herein have the same meanings as the meanings generally understood by one skilled in the art to which the present invention pertains. Terms, such as those defined in commonly used dictionaries, are to be interpreted as having meanings consistent with the relevant technical literature and the present disclosure, and are not to be interpreted as having idealized or overly formal meanings unless expressly so defined herein.

Hereinafter, embodiments of the present invention will be described in detail so that one skilled in the art to which the present invention pertains can easily implement the present invention. As those skilled in the art would realize, the described embodiments may be modified in various different ways, all without departing from the spirit or scope of the present invention.

FIG. 1 schematically shows a cross section of a non-oriented electrical steel sheet according to an embodiment of the present invention. As shown in FIG. 1, a non-oriented electrical steel sheet 100 includes a steel sheet base material 10 and an insulating coating film 20 positioned on a surface of the steel sheet base material 10. A surface portion 30 formed from the surface of the base material toward an inside may be present in the steel sheet base material 10.

The steel sheet base material 10 according to an embodiment of the present invention contains, by wt%: 2.0 to 6.5% of Si, 0.1 to 1.3% of Al, 0.3 to 2.0% of Mn, 0.005 to 0.06% of Cr, a balance of Fe and other inevitable impurities.

Hereinafter, the reason for limiting the components of the steel sheet base material 10 will be described.

Si: 2.0 to 6.5 wt%

Silicon (Si) serves to lower iron loss by increasing resistivity of a material, and if Si is added too little, the effect of improving the high-frequency iron loss may be insufficient. On the other hand, if Si is added excessively, the hardness of a material increases, and the cold rolling property deteriorates extremely, so that the productivity and punching property may become inferior. Therefore, Si may be added within the above-described range. More specifically, Si may be included in an amount of 2.5 to 5.0 wt%. More specifically, Si may be included in an amount of 3.0 to 4.0 wt%.

Al: 0.1 to 1.3 wt%

Aluminum (Al) serves to lower iron loss by increasing resistivity of a material. If Al is added too little, it is not effective in reducing high-frequency iron loss and fine nitrides may be formed to deteriorate the magnetic property. On the other hand, if Al is added excessively, it may cause problems in all processes such as steelmaking and continuous casting, resulting in a significant reduction in productivity. Therefore, Al may be added within the above-described range. More specifically, Al may be included in an amount of 0.5 to 1.2 wt%. More specifically, Al may be included in an amount of 0.7 to 1.0 wt%.

Mn: 0.3 to 2.0 wt%

Manganese (Mn) is an element that serves to improve iron loss by increasing resistivity of a material and to form sulfides. If Mn is added too little, sulfides may precipitate finely and deteriorate the magnetic property. On the other hand, if Mn is added excessively, the magnetic flux density may be reduced by promoting formation of a {111} texture that is disadvantageous to the magnetic property. Therefore, Mn may be added within the above-described range. More specifically, Mn may be included in an amount of 0.5 to 1.5 wt%.

In an embodiment of the present invention, the resistivity may be 55 to 80 $\mu\Omega \cdot$cm.

Cr: 0.005 to 0.060 wt%

Chromium (Cr) serves to improve iron loss by increasing resistivity of a material. Cr also serves to prevent Mn in the base material from diffusing into the insulating coating film during the stress relief annealing. Therefore, Cr may be added within the above-described range. More specifically, Cr may be included in an amount of 0.010 to 0.050 wt%. More specifically, Cr may be included in an amount of 0.050 to 0.040 wt%.

The steel plate base material 10 may further contain one or more of 0.06 wt% or less of Sn and 0.06 wt% or less of Sb.

One of more of 0.06 wt% or less of Sn and 0.06 wt% or less of Sb

As the segregating elements on the grain boundaries, tin (Sn) and antimony (Sb) are added to suppress the diffusion of nitrogen through the grain boundaries, suppress the {111} texture detrimental to the magnetic property, and increase the advantageous {100} texture to improve the magnetic property. If Sn and Sb are each added excessively, they inhibit the grain growth, deteriorating the magnetic property and the rolling properties. Therefore, Sn and Sb may be added within the above-described ranges. More specifically, Sn may be included in an amount of 0.005 wt% to 0.050 wt%, and Sb may be included in an amount of 0.005 wt% to 0.050 wt%. More specifically, Sn may be included in an amount of 0.01 wt% to 0.02 wt%, and Sb may be included in an amount of 0.01 wt% to 0.02 wt%. As described above, if additional elements are further included, they are included by replacing the balance of Fe.

The steel plate base material 10 may further contain one or more of 0.01 to 0.2 wt% of Cu, 0.100 wt% or less of P, 0.002 wt% or less of B, 0.01 wt% or less of Mo, 0.005 wt% or less of Mg, and 0.005 wt% or less of Zr.

Cu: 0.01 to 0.20 wt%

Copper (Cu) serves to form sulfides together with Mn. If Cu is added more or added too little, CuMnS may precipitate finely and deteriorate the magnetic property. If Cu is added excessively, high-temperature brittleness may occur, and cracks may be formed during continuous casting or hot rolling. More specifically, Cu may be further included in an amount of 0.05 to 0.10 wt%.

P 0.100 wt% or less

Phosphorous (P) not only serves to increase the resistivity of the material, but also segregates on the grain boundaries to improve the texture, thereby increasing resistivity and reducing iron loss; therefore, P may be additionally added. However, if the amount of P added is too large, as a texture that is disadvantageous to the magnetic property is formed, there is no texture improvement effect, and P excessively segregates on the grain boundaries, such that the rollability and processability are deteriorated, making production difficult. Therefore, P may be added within the above-described range. More specifically, P may be included in an amount of 0.001 to 0.090 wt%. More specifically, P may be included in an amount of 0.005 to 0.085 wt%.

B: 0.002 wt% or less, Mo: 0.01 wt% or less, Mg: 0.005 wt% or less, and Zr: 0.005 wt% or less

Since boron (B), molybdenum (Mo), magnesium (Mg), and zirconium (Zr) react with impurity elements to form fine sulfides, carbides, and nitrides, which have a detrimental effect on the magnetic property, contents of these elements may be limited as described above.

The steel sheet base material 10 may further include 0.005 wt% or less of one or more of C, N, S, Ti, Nb, and V, respectively.

C: 0.005 wt% or less

Carbon (C), when it is added a lot, expands the austenite region, increases the phase transformation zone, inhibits the crystal growth of ferrite during annealing, increases the iron loss, and combines with Ti or the like to form carbides to deteriorate the magnetic property. The iron loss is increased by magnetic aging at the time of use after processing a final product to an electrical product. Therefore, C may be added within the above-described range. More specifically, C may be included in an amount of 0.003 wt% or less.

S: 0.005wt% or less

Sulfur (S) forms fine sulfides inside the base material to inhibit grain growth and weaken the iron loss, and therefore, S is preferably added as little as possible. If a large amount of S is included, S may combine with Mn and the like to form precipitates or cause high-temperature brittleness during hot rolling. Therefore, S may be further included in an amount of 0.005 wt% or less. Specifically, S may be further included in an amount of 0.0030 wt% or less. More specifically, S may be further included in an amount of 0.0001 to 0.0030 wt%.

N: 0.005 wt% or less

Nitrogen (N) combines strongly with Al, Ti, and the like to form nitrides, which inhibit grain growth, and when it precipitates, it interferes with magnetic domain movement, so N is preferably contained in a small amount. Therefore, N may be added within the above-described range. More specifically, N may be included in an amount of 0.003 wt% or less.

Ti, Nb, and V: 0.005 wt% or less, respectively

Titanium (Ti), niobium (Nb), vanadium (V), and the like are also strong carbonitride-forming elements and are thus preferably not added as much as possible, and may be contained in an amount of 0.01 wt% or less, respectively.

The balance includes Fe and inevitable impurities. The inevitable impurities are impurities to be mixed in the steelmaking process and the manufacturing process of the grain oriented electrical steel sheet and are well known in the art. Therefore, specific descriptions thereof will be omitted. In an embodiment of the present invention, the addition of elements other than the above-described alloy components is not excluded, and various elements may be included within a range in which the technical spirit of the present invention is not impaired. If additional components are included, they are included by replacing the balance of Fe.

In an embodiment of the present invention, the diffusion of Mn into the insulating coating film 20 during the stress relief annealing can be suppressed by adding Cr to the steel sheet base material 10.

If the diffusion of Mn into the insulating coating film 20 increases and the Mn component in the insulating coating film is too high, the insulating property of the insulating coating film may deteriorate. Additionally, the bonding force between the insulating coating film and the base material may be weakened.

When a concentration of Mn at a depth of 50 $\mu$m from the surface of the steel sheet base material 10 toward an inside of the base material is referred to as [Mn50] and a concentration Mn in the insulating coating film 20 is referred to as [Mn coating film], Formula 1 below is satisfied before stress relief annealing, and Formula 2 below is satisfied after stress relief annealing.

[Formula 1]

$$0.1 \geq [\text{Mn coating film}]/[\text{Mn50}]$$

[Formula 2]

$$10 \geq [\text{Mn coating film}]/[\text{Mn50}] \geq 1$$

The stress relief annealing may be performed at a temperature of 700°C to 850°C for 10 minutes to 300 minutes. More specifically, the stress relief annealing may be performed at a temperature of 800 to 850°C for 30 minutes to 120 minutes. More specifically, the stress relief annealing may be performed at a temperature of 825°C for 60 minutes.

By adding Cr to the steel sheet base material 10, a surface portion 30 in which Cr and O are concentrated is formed from the surface of the steel sheet base material 10 toward the inside of the base material. That is, the surface portion 30 is present at the interface between the steel sheet base material 10 and the insulating coating film 20. The surface portion 30 serves to prevent diffusion of Mn from the steel sheet base material 10 to the insulating coating film 20. The surface portion 30 refers to a portion with an oxygen content of 5% by weight or more. When exposed to oxygen during the manufacturing process, oxygen in the atmosphere penetrates into the steel sheet, whereby the surface portion is formed from the surface toward the inside.

The surface portion 30 formed as such may have a thickness of 10 to 100 nm. If the surface portion 30 is formed too thin, it is difficult to properly prevent the diffusion of Mn. If the surface portion 30 is formed too thick, the magnetic property may deteriorate. Accordingly, the surface portion 30 may be present with a thickness in the above-described range. More specifically, the thickness of the surface portion may be 15 to 80 nm.

The surface portion 30 may contain 0.5 to 5 wt% of Cr and 5 to 50 wt% of O. As described above, the contents of Cr and O in the surface portion 30 have a concentration gradient in the thickness direction, and the above-described ranges refer to average contents in the thickness direction of the surface portion 30. The remaining components may be the same as those of the steel sheet base material 10.

The insulating coating film 20 is positioned on the surface of the steel sheet base material 10. The insulating coating film 20 serves to provide insulation between non-oriented electrical steel sheets when manufacturing a product by stacking the non-oriented electrical steel sheets. The insulating coating film 20 may be treated with organic, inorganic, and organic-inorganic composite coating films, and may be formed by treatment with other insulating coating film agents.

For example, when the insulating coating film 20 is formed using a phosphate-based insulating coating film composition, the insulating coating film may contain 5 to 50 wt% of P and 0.01 wt% or less of Mn. As such, the insulating coating film 20 before stress relief annealing contains a small amount of Mn. The remainder may be O. Si may be further included in an amount of 1 to 10 wt%.

The insulating coating film 20 before stress relief annealing may satisfy Formula 1 below.

[Formula 1]

$$0.1 \geq [\text{Mn coating film}]/[\text{Mn50}]$$

(in Formula 1, [Mn coating film] refers to an average content of Mn (wt%) in the insulating coating film, and [Mn50] refers to a content of Mn (wt%) at a depth of 50 $\mu$m from an interface between the steel sheet base material and the insulating coating film toward an inside of the steel sheet base material.)

Note that the insulating coating film after stress relief annealing may contain 2.0 to 10.0 wt% of Mn as a result of partial diffusion of Mn from the steel sheet base material 10. The remaining components may be the same as those before stress relief annealing. That is, the insulating coating film 20 after stress relief annealing can satisfy Formula 2 below.

[Formula 2]

$$10 \geq [\text{Mn coating film}]/[\text{Mn50}] \geq 1$$

(in Formula 2, [Mn coating film] refers to an average content of Mn (wt%) in the insulating coating film)

More specifically, the value of Formula 2 may be 1.10 to 5.0.

That is, after stress relief annealing, the insulating coating film 20 may contain 5 to 50 wt% of P and 2.0 to 10.0 wt% of Mn. The remainder may be O. Si may be further included in an amount of 1 to 10 wt%.

When the diffusion of Mn into the insulating coating film 20 progresses by an appropriate amount, the ratio of inorganics in the insulating coating film increases, thereby improving stability at high temperatures. In this case, stability is ensured during the stress relief annealing, so that the bonding force between the base material and the insulating coating film 20 can be maintained even after the stress relief annealing. Thereby, after the stress relief annealing, it is possible to maintain the bonding force of 5B or greater as a result of the ASTM D3559 crosscut test, which is a bonding force test.

A method for manufacturing a non-oriented electrical steel sheet according to an embodiment of the present invention includes the steps of manufacturing a hot-rolled sheet by hot rolling a slab; manufacturing a cold-rolled sheet by cold rolling the hot-rolled sheet; and annealing the cold-rolled sheet.

First, a slab is hot rolled.

Since the alloy components of the slab have been described in relation to the alloy components of the non-oriented electrical steel sheet, redundant descriptions will be omitted. Since the alloy components do not substantially change during the manufacturing process of the non-oriented electrical steel sheet, the alloy components of the non-oriented electrical steel sheet and the slab are substantially the same.

Specifically, the slab contains, by wt%: 2.0 to 6.5% of Si, 0.1 to 1.3% of Al, 0.3 to 2.0% of Mn, 0.005 to 0.06% of Cr, and a balance of Fe and other inevitable impurities.

Since other additional elements have been described in relation to the alloy components of the non-oriented electrical steel sheet, redundant descriptions will be omitted.

The slab may be heated before hot rolling. The heating temperature of the slab is not limited, but the slab may be heated to 1100 to 1250°C. If the heating temperature of the slab is too high, precipitates detrimental to the magnetic property may re-dissolve and finely precipitate after hot rolling.

Next, the slab is hot rolled to manufacture a hot-rolled sheet. A thickness of the hot-rolled sheet may be 2 to 3.0 mm.

After the step of manufacturing the hot-rolled sheet, the step of subjecting the hot-rolled sheet to hot-rolled sheet annealing may be further included. The hot-rolled sheet annealing is preferably performed when manufacturing high-quality electrical steel sheets without phase transformation, and is effective in improving the magnetic flux density by improving the texture of the final annealed sheet.

In this case, the step of annealing the hot-rolled sheet may be annealed at a temperature of 850 to 1200°C. If the temperature of the hot-rolled sheet annealing is too low, the texture does not grow or grows finely, making it difficult to expect an increase in magnetic flux density. If the temperature of the hot-rolled sheet annealing is too high, the magnetic property may deteriorate and rolling workability may deteriorate due to deformation of the shape of the sheet. The hot-rolled sheet annealing is performed so as to increase the orientation advantageous to the magnetic property as needed, and may also be omitted.

Next, the scale present on a surface of the hot rolled sheet subjected to the hot rolling or hot-rolled sheet annealing is removed. In an embodiment of the present invention, a projection amount of a shot ball is increased to contribute to formation of a Cr oxide layer on the surface of the base material in the final product, whereby the diffusion of Mn into the insulating coating film during the stress relief annealing step is controlled.

The step of removing the scale includes the step of removing the scale by projecting a shot ball onto the steel sheet in an amount of 15 to 35 kg/(min·m²). 스케일을 제거하는 If the projection amount of the shot ball is too small, the residual oxide layer on the surface interferes with the formation of the Cr oxide layer in the final annealing step, making it difficult to control the diffusion of Mn during the stress relief annealing step. On the other hand, if the projection amount of the shot ball is too large, the surface of the steel plate is greatly damaged, so the upper limit may be adjusted appropriately. More specifically, the shot ball may be projected onto the steel sheet in an amount of 17 to 30 kg/(min·m²). Even when the same amount of shot ball per area is projected, differences occur in the formation of the Cr oxide layer and in the diffusion of Mn depending on the projection time. Therefore, in an embodiment of the present invention, the projection amount is defined according to time and area.

An average particle size of the shot ball may be 0.1 to 1 mm, and the shot ball may be projected for 1 second to 60 seconds. More specifically, the average particle size of the shot ball may be 0.3 to 0.8 mm, and the shot ball may be projected for 5 seconds to 30 seconds. The average particle size of the shot ball and the projection time of the shot ball may also affect the diffusion of Mn into the insulating coating film.

A material of the shot ball is not particularly limited, but Fe-based alloys may be used.

Next, the hot-rolled steel sheet is cold-rolled to manufacture a cold-rolled steel sheet. The cold rolling may finally roll the hot-rolled steel sheet to a thickness of 0.15 mm to 0.65 mm. If necessary, secondary cold rolling may be performed after primary cold rolling and intermediate annealing, and the final reduction ratio may be within a range of 50 to 95%.

Next, cold-rolled sheet annealing is performed. The cold-rolled sheet annealing is performed for 10 to 1000 seconds within the range of 700 to 1100°C so that the crystal grain size in the cross section of the steel sheet is 50 to 150 μm. If the final annealing temperature is too low, the iron loss may deteriorate due to small crystal grains. If the temperature is too high, the crystal grains become coarse, an abnormal eddy current loss increases, resulting in an increase in total iron loss. More specifically, the annealing may be performed within a range of 900°C to 1050°C.

After the cold-rolled sheet annealing, all (99% or more) of the structure processed by cold rolling in the steel sheet may be recrystallized.

When annealing the cold-rolled sheet, a rate of temperature rise to the soaking temperature may be 30 to 150°C/sec. Only when the rate of temperature rise is appropriately controlled, the surface portion can be formed thin and dense to prevent the diffusion of Mn.

The step of annealing the cold-rolled sheet may anneal the cold-rolled sheet under an atmosphere in which 40 vol% or less of hydrogen ($H_2$) and 60 vol% or more of nitrogen are included and a dew point is 0 to -40°C. Specifically, the annealing may be performed under an atmosphere in which 0 to 10 vol% of hydrogen and 90 to 100 vol% of nitrogen are included. Only when the annealing atmosphere is appropriately controlled, the surface portion can be formed thin and dense to prevent the diffusion of Mn.

Next, after annealing the cold-rolled sheet, an insulating coating film may be formed. The insulating coating film may be treated with organic, inorganic, and organic-inorganic composite coating films, and may also be treated with other insulating coating film agents. For example, the insulating coating film may be formed by applying an insulating coating film-forming composition containing 40 to 70 wt% of metal phosphate and 0.5 to 10 wt% of silica. The insulating coating film contains P in a large amount of 5 wt% or more in metal phosphate, and is distinguished from the steel sheet base material containing less than 5 wt% of P.

Next, the stress relief annealing step is performed. The stress relief annealing step is performed at a temperature of 700°C to 850°C for 10 minutes to 300 minutes.

A motor core according to an embodiment of the present invention includes: a stator made by stacking a plurality of non-oriented electrical steel sheets, and a rotor made by stacking a plurality of non-oriented electrical steel sheets,

wherein the non-oriented electrical steel sheets in the rotor include, respectively: a steel sheet base material containing, by wt%: 2.0 to 6.5% of Si, 0.1 to 1.3% of Al, 0.3 to 2.0% of Mn, 0.005 to 0.06% of Cr, and a balance of Fe and other inevitable impurities, and an insulating coating film positioned on the steel sheet base material, and Formula 1 below is satisfied, and

wherein the non-oriented electrical steel sheets in the stator include, respectively: a steel sheet base material containing, by wt%: 2.0 to 6.5% of Si, 0.1 to 1.3% of Al, 0.3 to 2.0% of Mn, 0.005 to 0.06% of Cr, and a balance of Fe and other inevitable impurities, and an insulating coating film positioned on the steel sheet base material, and Formula 2 below is satisfied.

[Formula 1]

$$0.1 \geq [\text{Mn coating film}]/[\text{Mn50}]$$

[Formula 2]

$$10 \geq [\text{Mn coating film}]/[\text{Mn50}] \geq 1$$

(in Formulas 1 and 2, [Mn coating film] refers to an average content of Mn (wt%) in the insulating coating film, and [Mn50] refers to a content of Mn (wt%) at a depth of 50 $\mu$m from an interface between the steel sheet base material and the insulating coating film toward an inside of the steel sheet base material.)

In the case of a stator, magnetic characteristics are more important than mechanical characteristics, so the magnetic property can be improved through SRA after punching and stacking. Therefore, after SRA, the characteristics of the non-oriented electrical steel sheet appear in the stator. Since the steel components of the non-oriented electrical steel sheet, the diffusion of Mn, and the content of Mn in the insulating coating film have been described in relation to the non-oriented electrical steel sheet described above, redundant descriptions will be omitted.

In the case of a rotor, mechanical characteristics are more important than magnetic characteristics. Therefore, the SRA process, which may deteriorate mechanical characteristics, can be omitted. Accordingly, the characteristics of the non-oriented electrical steel sheet before SRA are derived. Since the steel components of the non-oriented electrical steel sheet, the diffusion of Mn, and the content of Mn in the insulating coating film have been described in relation to the non-oriented electrical steel sheet described above, redundant descriptions will be omitted.

Note that the stator and the rotor are punched out roughly in a shape of a doughnut or disk. When a stator and a rotor are manufactured by punching the stator and rotor from separate coils of the non-oriented electrical steel, the remaining punched parts are scrapped, which leads to an increase in process costs and waste of resources and energy. When the stator and the rotor are manufactured by punching the same from the same coil, the parts to be scrapped can be minimized.

Accordingly, in an embodiment of the present invention, the non-oriented electrical steel sheets included in the stator and the rotor may be non-oriented electrical steel sheets derived from the same coil. In an embodiment of the present invention, the description 'derived from the same coil' means that the steel components such as Si, Al, and Mn in the non-oriented electrical steel sheets included in the stator and rotor are substantially the same. Specifically, it means that a difference in contents of Si, Al, and Mn between the stator and the rotor is 0.20 wt% or less. More specifically, it means that the difference in contents of Si, Al, and Mn between the stator and the rotor is 0.10 wt% or less. More specifically, it means that the difference in contents of Si, Al, and Mn between the stator and the rotor is 0.05 wt% or less. More specifically, it means that the difference in contents of Si, Al, and Mn between the stator and the rotor is 0.01 wt% or less. In the case of Cr, the difference in content between the stator and rotor may be 0.01 wt% or less. More specifically, the difference in content may be 0.005 wt% or less. The composition of the insulating coating film may also be substantially the same between the stator and the rotor.

Below, the present invention will be described in more detail with reference to Examples. However, these Examples are only for illustrating the present invention, and the present invention is not limited thereto.

Example 1

Slabs composed of Table 1 and Table 2 below and the balance of Fe and other inevitably added impurities were prepared. The slab was heated to 1150°C and hot-finish rolled at 850°C to produce a hot-rolled sheet with a thickness of 2.3 mm. The hot-rolled sheet was annealed at 1100°C for 4 minutes and then blasted with a projection amount of the shot ball listed in Table 3 below to remove scale. Then, cold rolling was performed to reduce the sheet thickness to 0.27 mm, the temperature was raised at a rate of 100°C/sec, and final annealing was performed at 970°C for 5 minutes in a nitrogen atmosphere. The insulating coating film was formed to have a thickness of 0.5 $\mu$m using an insulating coating film composition containing 50 wt% of Al phosphate and 5 wt% of silica.

Then, annealing was performed at 825°C for 1 hour so as to relieve stress. With this, a non-oriented electrical steel sheet from which stress was removed was finally prepared. The components in the depth direction were measured three times with a glow discharge spectrometer, and the average values of [Mn coating film] and [Mn50] are shown in Table 3 below in accordance with the experimental conditions.

The close adhesion property was measured using the Crosscut Test (ASTM D3359) method.

(Table 1)

| (wt%) | Si | Al | Mn | Cr | Sn | Sb |
|---|---|---|---|---|---|---|
| 1 | 2.4 | 1.1 | 0.6 | 0.015 | 0.01 | 0.05 |
| 2 | 2.9 | 0.9 | 0.9 | 0.020 | 0.01 | 0.04 |
| 3 | 3.3 | 0.7 | 1.2 | 0.025 | 0.02 | 0.06 |
| 4 | 3.5 | 0.5 | 1.5 | 0.030 | 0.02 | 0.05 |
| 5 | 4.0 | 0.3 | 1.8 | 0.035 | 0.02 | 0.04 |
| 6 | 3.8 | 1.2 | 1.7 | 0.045 | 0.03 | 0.02 |
| 7 | 4.1 | 0.8 | 1.1 | 0.055 | 0.06 | 0.03 |
| 8 | 1.8 | 1.3 | 0.3 | 0.010 | 0.01 | 0.06 |
| 9 | 7.0 | 0.4 | 0.5 | 0.055 | 0.06 | 0.01 |
| 10 | 3.1 | 0.08 | 1.5 | 0.030 | 0.02 | 0.05 |
| 11 | 3.2 | 1.5 | 1.8 | 0.035 | 0.02 | 0.04 |
| 12 | 3.2 | 0.6 | 0.2 | 0.035 | 0.02 | 0.04 |
| 13 | 3.0 | 0.9 | 2.3 | 0.025 | 0.02 | 0.06 |
| 14 | 3.3 | 0.7 | 1.3 | 0.003 | 0.02 | 0.06 |
| 15 | 3.4 | 0.8 | 1.1 | 0.070 | 0.06 | 0.02 |
| 16 | 2.0 | 1.1 | 0.6 | 0.015 | 0.01 | 0.05 |
| 17 | 2.5 | 0.9 | 0.9 | 0.020 | 0.01 | 0.04 |
| 18 | 3.0 | 0.7 | 1.2 | 0.025 | 0.02 | 0.06 |
| 19 | 3.5 | 0.5 | 1.5 | 0.030 | 0.02 | 0.05 |
| 20 | 5.0 | 1.2 | 1.7 | 0.045 | 0.03 | 0.02 |
| 21 | 5.5 | 1.0 | 1.4 | 0.500 | 0.03 | 0.01 |

(Table 2)

| (wt%) | C | N | S | Ti | Nb | V |
|---|---|---|---|---|---|---|
| 1 | 0.002 | 0.003 | 0.001 | 0.004 | 0.001 | 0.005 |
| 2 | 0.003 | 0.001 | 0.003 | 0.003 | 0.005 | 0.003 |
| 3 | 0.001 | 0.005 | 0.003 | 0.003 | 0.005 | 0.003 |
| 4 | 0.002 | 0.003 | 0.003 | 0.003 | 0.005 | 0.002 |
| 5 | 0.003 | 0.001 | 0.005 | 0.002 | 0.003 | 0.002 |
| 6 | 0.001 | 0.004 | 0.005 | 0.001 | 0.001 | 0.001 |
| 7 | 0.003 | 0.001 | 0.002 | 0.005 | 0.003 | 0.002 |
| 8 | 0.001 | 0.005 | 0.001 | 0.004 | 0.001 | 0.005 |
| 9 | 0.005 | 0.003 | 0.004 | 0.005 | 0.005 | 0.003 |
| 10 | 0.002 | 0.003 | 0.003 | 0.003 | 0.005 | 0.002 |
| 11 | 0.003 | 0.001 | 0.005 | 0.002 | 0.003 | 0.002 |
| 12 | 0.003 | 0.001 | 0.005 | 0.002 | 0.003 | 0.002 |
| 13 | 0.001 | 0.005 | 0.003 | 0.003 | 0.005 | 0.003 |

(continued)

| (wt%) | C | N | S | Ti | Nb | V |
|---|---|---|---|---|---|---|
| 14 | 0.001 | 0.005 | 0.003 | 0.003 | 0.005 | 0.003 |
| 15 | 0.004 | 0.005 | 0.004 | 0.005 | 0.004 | 0.003 |
| 16 | 0.002 | 0.003 | 0.001 | 0.004 | 0.001 | 0.005 |
| 17 | 0.003 | 0.001 | 0.003 | 0.003 | 0.005 | 0.003 |
| 18 | 0.001 | 0.005 | 0.003 | 0.003 | 0.005 | 0.003 |
| 19 | 0.002 | 0.003 | 0.003 | 0.003 | 0.005 | 0.002 |
| 20 | 0.001 | 0.004 | 0.005 | 0.001 | 0.001 | 0.001 |
| 21 | 0.002 | 0.005 | 0.002 | 0.001 | 0.002 | 0.002 |

(Table 3)

| | Projection amount of shot ball (kg/min·m$^2$) | Projection time of shot ball (sec) | Thickness of surface portion (nm) | Mn coating film | Mn50 | Mn coating film | Mn50 | [Mn coating film]/ [Mn50] | Close adhesion property |
|---|---|---|---|---|---|---|---|---|---|
| 1 | 25 | 55 | 24 | 0.001 | 0.58 | 2.35 | 0.57 | 4.12 | 5B |
| 2 | 30 | 50 | 27 | 0.001 | 0.91 | 2.98 | 0.91 | 3.27 | 5B |
| 3 | 35 | 45 | 31 | 0.001 | 1.23 | 3.54 | 1.22 | 2.90 | 5B |
| 4 | 33 | 40 | 36 | 0.001 | 1.45 | 3.58 | 1.46 | 2.45 | 5B |
| 5 | 31 | 35 | 42 | 0.001 | 1.70 | 3.52 | 1.71 | 2.06 | 5B |
| 6 | 27 | 25 | 55 | 0.001 | 1.68 | 4.25 | 1.68 | 2.53 | 5B |
| 7 | 23 | 15 | 75 | 0.001 | 1.12 | 2.58 | 1.12 | 2.30 | 5B |
| 8 | 20 | 60 | 20 | 0.001 | 0.30 | 0.3 | 0.31 | 0.97 | 4B |
| 9 | 19 | 5 | 75 | cold rolling not possible | | | | | |
| 10 | 17 | 3 | 36 | 0.001 | 1.49 | 1.3 | 1.48 | 0.88 | 3B |
| 11 | 15 | 1 | 43 | 0.001 | 1.79 | 1.62 | 1.81 | 0.90 | 4B |
| 12 | 18 | 4 | 43 | 0.001 | 0.18 | 0.19 | 0.21 | 0.90 | 4B |
| 13 | 24 | 12 | 31 | 0.001 | 2.27 | 1.98 | 2.25 | 0.88 | 3B |
| 14 | 27 | 16 | 7 | 0.001 | 1.31 | 1.25 | 1.3 | 0.96 | 4B |
| 15 | 30 | 20 | 110 | 0.001 | 1.14 | 1.12 | 1.18 | 0.95 | 4B |
| 16 | 13 | 24 | 202 | 0.001 | 0.60 | 0.43 | 0.6 | 0.72 | 3B |
| 17 | 11 | 28 | 253 | 0.001 | 0.90 | 0.75 | 0.91 | 0.82 | 3B |
| 18 | 38 | 32 | 312 | 0.001 | 1.21 | 1.10 | 1.21 | 0.91 | 4B |
| 19 | 40 | 36 | 352 | 0.001 | 1.52 | 1.40 | 1.51 | 0.93 | 4B |
| 20 | 30 | 0.5 | 19 | 0.001 | 1.68 | 1.75 | 1.69 | 1.04 | 5B |
| 21 | 35 | 70 | 57 | 0.001 | 1.37 | 1.48 | 1.36 | 1.09 | 5B |

As shown in Tables 1 to 3, in the case of the Example in which an appropriate amount of Cr is included to inhibit the diffusion of Mn, it can be confirmed that the Mn component is properly distributed in the insulating coating film after stress relief annealing is performed. On the other hand, in the case of Nos. 8 to 15 in which the alloy components were not properly controlled, it can be confirmed that Mn cannot be sufficiently diffused into the insulating coating film.

Note that even if the alloy composition is appropriately controlled, when the projection amount of the shot ball is not properly controlled, it can be confirmed that the surface portion of the oxide layer is formed thick, and Mn cannot be sufficiently diffused into the insulating coating film.

It will be understood by one skilled in the art to which the present invention belongs that the present invention is not limited to the above embodiments, but can be manufactured in a variety of different forms, and can be implemented in other specific forms without changing the technical spirit or essential features of the present invention. Therefore, the embodiments described above should be understood as illustrative in all respects and not for purposes of limitation.

[Reference signs list]

100: non-oriented electrical steel sheet,
10: steel plate base material,
20: insulating coating film, 30: surface portion

**Claims**

1. A non-oriented electrical steel sheet comprising:

   a steel sheet base material containing, by wt%: 2.0 to 6.5% of Si, 0.1 to 1.3% of Al, 0.3 to 2.0% of Mn, .005 to 0.06% of Cr, and a balance of Fe and other inevitable impurities; and
   an insulating coating film positioned on the steel sheet base material,
   wherein Formula 1 below is satisfied before stress relief annealing, and Formula 2 below is satisfied after the stress relief annealing.

   [Formula 1]

   $$0.1 \geq [\text{Mn coating film}]/[\text{Mn50}]$$

   [Formula 2]

   $$10 \geq [\text{Mn coating film}]/[\text{Mn50}] \geq 1$$

   (in Formulas 1 and 2, [Mn coating film] refers to an average content of Mn (wt%) in the insulating coating film, and [Mn50] refers to a content of Mn (wt%) at a depth of 50 $\mu$m from an interface between the steel sheet base material and the insulating coating film toward an inside of the steel sheet base material.)

2. The non-oriented electrical steel sheet of claim 1, wherein:
   the steel sheet base material further contains one or more of 0.06 wt% or less of Sn and 0.06 wt% or less of Sb.

3. The non-oriented electrical steel sheet of claim 1, wherein:
   the steel sheet base material further contains 0.005 wt% or less of one or more of C, N, S, Ti, Nb, and V.

4. The non-oriented electrical steel sheet of claim 1, wherein:
   the steel sheet base material further contains one or more of 0.01 to 0.2 wt% of Cu, 0.100 wt% or less of P, 0.002 wt% or less of B, 0.01 wt% or less of Mo, 0.005 wt% or less of Mg, and 0.005 wt% or less of Zr.

5. The non-oriented electrical steel sheet of claim 1, wherein:
   the stress relief annealing is performed at a temperature of 700°C to 850°C for 10 minutes to 300 minutes.

6. A method for manufacturing a non-oriented electrical steel sheet, the method comprising:

   manufacturing a hot-rolled sheet by hot rolling a slab containing, by wt%: 2.0 to 6.5% of Si, 0.1 to 1.3% of Al, 0.3 to 2.0% of Mn, 0.005 to 0.06% of Cr, and a balance of Fe and inevitable impurities;

removing scale present on a surface of the hot rolled sheet;
manufacturing a cold-rolled sheet by cold rolling the hot-rolled sheet from which the scale has been removed; and
subjecting the cold-rolled sheet to cold-rolled sheet annealing,
wherein the removing the scale comprises removing the scale by projecting a shot ball onto a steel sheet in an amount of 15 to 35 kg/(min·m$^2$).

7. The method of claim 6, wherein:
an average particle size of the shot ball is 0.1 to 1 mm, and the shot ball is projected for 1 second to 60 seconds.

8. The method of claim 6, wherein:
a material of the shot ball is an Fe-based alloy.

9. The method of claim 6, wherein:
the cold-rolled sheet annealing is annealed at a temperature of 700°C to 1100°C for 10 to 1000 seconds.

10. The method of claim 6, further comprising
performing hot-rolled sheet annealing before the removing the scale.

11. The method of claim 6, further comprising
performing stress relief annealing after the cold-rolled sheet annealing.

12. A motor core comprising:

a stator made by stacking a plurality of non-oriented electrical steel sheets, and
a rotor made by stacking a plurality of non-oriented electrical steel sheets,
wherein the non-oriented electrical steel sheets in the rotor comprise, respectively: a steel sheet base material containing, by wt%: 2.0 to 6.5% of Si, 0.1 to 1.3% of Al, 0.3 to 2.0% of Mn, 0.005 to 0.06% of Cr, and a balance of Fe and other inevitable impurities, and an insulating coating film positioned on the steel sheet base material, and Formula 1 below is satisfied, and
wherein the non-oriented electrical steel sheets in the stator comprise, respectively: a steel sheet base material containing, by wt%: 2.0 to 6.5% of Si, 0.1 to 1.3% of Al, 0.3 to 2.0% of Mn, 0.005 to 0.06% of Cr, and a balance of Fe and other inevitable impurities, and an insulating coating film positioned on the steel sheet base material, and Formula 2 below is satisfied.

[Formula 1]

$$0.1 \geq [\text{Mn coating film}]/[\text{Mn50}]$$

[Formula 2]

$$10 \geq [\text{Mn coating film}]/[\text{Mn50}] \geq 1$$

(in Formulas 1 and 2, [Mn coating film] refers to an average content of Mn (wt%) in the insulating coating film, and [Mn50] refers to a content of Mn (wt%) at a depth of 50 $\mu$m from an interface between the steel sheet base material and the insulating coating film toward an inside of the steel sheet base material.)

13. The motor core of claim 12, wherein:
the non-oriented electrical steel sheets included in the stator and rotor are non-oriented electrical steel sheets derived from the same coil.

14. The motor core of claim 12, wherein:
a difference in contents of Si, Al, and Mn between the non-oriented electrical steel sheets included in the stator and the rotor is 0.20 wt% or less.

# FIG. 1

100

20    30

10

20

## INTERNATIONAL SEARCH REPORT

| International application No. |
| --- |
| **PCT/KR2022/020964** |

| A. CLASSIFICATION OF SUBJECT MATTER |
| --- |
| **C22C 38/34**(2006.01)i; **C22C 38/38**(2006.01)i; **C22C 38/06**(2006.01)i; **C22C 38/20**(2006.01)i; **C22C 38/22**(2006.01)i; **C22C 38/32**(2006.01)i; **C22C 38/28**(2006.01)i; **C21D 8/12**(2006.01)i; **H01F 1/147**(2006.01)i; **H02K 15/02**(2006.01)i |
| According to International Patent Classification (IPC) or to both national classification and IPC |

| B. FIELDS SEARCHED |
| --- |
| Minimum documentation searched (classification system followed by classification symbols) |
| C22C 38/34(2006.01); B21B 3/00(2006.01); C21D 7/06(2006.01); C21D 8/12(2006.01); C22C 38/00(2006.01); C22C 38/02(2006.01); C22C 38/14(2006.01) |
| Documentation searched other than minimum documentation to the extent that such documents are included in the fields searched |
| Korean utility models and applications for utility models: IPC as above<br>Japanese utility models and applications for utility models: IPC as above |
| Electronic data base consulted during the international search (name of data base and, where practicable, search terms used) |
| eKOMPASS (KIPO internal) & keywords: 무방향성 전기강판(non oriented electrical plate), 스케일(scale), 제거(remove), 샷볼(shot ball), 모터 코어(motor core), 크롬(cr), 응력 제거 소둔(stress relieving annealing) |

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | KR 10-2019-0003783 A (NIPPON STEEL & SUMITOMO METAL CORPORATION) 09 January 2019 (2019-01-09)<br>　　See paragraph [0003]; and claims 1, 5-6 and 11. | 1-14 |
| A | KR 10-2005-0057106 A (JFE STEEL CORPORATION) 16 June 2005 (2005-06-16)<br>　　See paragraph [0070]; and claims 5-6. | 1-14 |
| A | CHOI, Dongmyung et al. Discrete element method and experiments applied to a new impeller blade design for enhanced coverage and uniformity of shot blasting. Surface & Coatings Technology. 03 April 2019, Vol. 367, pp. 262-270.<br>　　See page 265. | 1-14 |
| A | KR 10-2015-0004639 A (POSCO) 13 January 2015 (2015-01-13)<br>　　See claims 7 and 13-14. | 1-14 |
| A | KR 10-2012-0051388 A (POSCO) 22 May 2012 (2012-05-22)<br>　　See paragraphs [0034]-[0036]. | 1-14 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **23 March 2023** | **23 March 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| International application No. |
| --- |
| **PCT/KR2022/020964** |

| Patent document cited in search report | | | Publication date (day/month/year) | Patent family member(s) | | | Publication date (day/month/year) |
| --- | --- | --- | --- | --- | --- | --- | --- |
| KR | 10-2019-0003783 | A | 09 January 2019 | BR | 112018075826 | A2 | 19 March 2019 |
| | | | | BR | 112018075826 | B1 | 16 August 2022 |
| | | | | CN | 109563583 | A | 02 April 2019 |
| | | | | CN | 109563583 | B | 15 October 2021 |
| | | | | EP | 3495525 | A1 | 12 June 2019 |
| | | | | EP | 3495525 | A4 | 01 January 2020 |
| | | | | EP | 3495525 | B1 | 06 April 2022 |
| | | | | JP | 6690714 | B2 | 28 April 2020 |
| | | | | KR | 10-2227328 | B1 | 12 March 2021 |
| | | | | PL | 3495525 | T3 | 20 June 2022 |
| | | | | RS | 63177 | B1 | 30 June 2022 |
| | | | | TW | 201812051 | A | 01 April 2018 |
| | | | | TW | I643965 | B | 11 December 2018 |
| | | | | US | 11295881 | B2 | 05 April 2022 |
| | | | | US | 2019-0228891 | A1 | 25 July 2019 |
| | | | | WO | 2018-025941 | A1 | 08 February 2018 |
| KR | 10-2005-0057106 | A | 16 June 2005 | CN | 1303242 | C | 07 March 2007 |
| | | | | CN | 1678766 | A | 05 October 2005 |
| | | | | CN | 1678766 | C | 07 March 2007 |
| | | | | EP | 1538230 | A1 | 08 June 2005 |
| | | | | EP | 1538230 | A4 | 14 November 2007 |
| | | | | EP | 1538230 | B1 | 18 February 2009 |
| | | | | JP | 2004-115909 | A | 15 April 2004 |
| | | | | KR | 10-0665128 | B1 | 09 January 2007 |
| | | | | TW | 200404904 | A | 01 April 2004 |
| | | | | TW | I306123 | B | 11 February 2009 |
| | | | | US | 2005-0241737 | A1 | 03 November 2005 |
| | | | | WO | 2004-022808 | A1 | 18 March 2004 |
| KR | 10-2015-0004639 | A | 13 January 2015 | CN | 105378128 | A | 02 March 2016 |
| | | | | CN | 105378128 | B | 19 September 2017 |
| | | | | EP | 3018227 | A1 | 11 May 2016 |
| | | | | EP | 3018227 | A4 | 20 July 2016 |
| | | | | EP | 3018227 | B1 | 06 March 2019 |
| | | | | JP | 2016-529394 | A | 23 September 2016 |
| | | | | JP | 6307602 | B2 | 04 April 2018 |
| | | | | KR | 10-1543834 | B1 | 11 August 2015 |
| | | | | KR | 10-1560875 | B1 | 15 October 2015 |
| | | | | KR | 10-2015-0037247 | A | 08 April 2015 |
| | | | | US | 10196703 | B2 | 05 February 2019 |
| | | | | US | 2016-0153064 | A1 | 02 June 2016 |
| | | | | WO | 2015-002363 | A1 | 08 January 2015 |
| | | | | WO | 2015-002363 | A8 | 19 February 2015 |
| KR | 10-2012-0051388 | A | 22 May 2012 | KR | 10-1299786 | B1 | 23 August 2013 |

Form PCT/ISA/210 (patent family annex) (July 2022)